(19) Europäisches Patentamt / European Patent Office / Office européen des brevets

(11) **EP 3 412 725 A1**

(12) **EUROPEAN PATENT APPLICATION**
published in accordance with Art. 153(4) EPC

(43) Date of publication:
**12.12.2018 Bulletin 2018/50**

(51) Int Cl.:
**C08L 67/02** (2006.01)   **B29C 73/24** (2006.01)
**B29C 47/88** (2006.01)   **C08J 5/18** (2006.01)
**C08J 7/00** (2006.01)   **C08G 63/16** (2006.01)
**C08G 63/181** (2006.01)   **C08G 63/183** (2006.01)
**C08G 63/78** (2006.01)   **C08G 63/82** (2006.01)

(21) Application number: **17887243.8**

(86) International application number:
**PCT/KR2017/015001**

(22) Date of filing: **19.12.2017**

(87) International publication number:
**WO 2018/124585 (05.07.2018 Gazette 2018/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **28.12.2016  KR 20160180844**
**14.08.2017  KR 20170103233**
**14.08.2017  KR 20170103244**

(71) Applicant: **SKC Co., Ltd.**
**Suwon-si, Gyeonggi-do 16336 (KR)**

(72) Inventors:
• **OH, Mi Ok**
**Suwon-si**
**Gyeonggi-do 16340 (KR)**
• **LEE, Deuk-Young**
**Suwon-si**
**Gyeonggi-do 16329 (KR)**

(74) Representative: **Dehns**
**St. Brides House**
**10 Salisbury Square**
**London EC4Y 8JD (GB)**

(54) **POLYESTER RESIN, PREPARATION METHOD THEREFOR, AND COPOLYMER POLYESTER FILM MANUFACTURING METHOD USING SAME**

(57)    An embodiment relates to a polyester resin, which not only has a low heat of crystallization and is excellent in calendering processability, but is also economical and environmentally friendly, and to a process for preparing the same. In addition, another embodiment relates to a process for preparing a copolymerized polyester film by a calendering process using the polyester resin, which film is economical, environmentally friendly, and excellent in surface hardness, UV resistance, and so on, and to a film prepared thereby. Furthermore, still another embodiment relates to a polyester resin composition for calendering, which has a low heat of crystallization and is excellent in calendering processability, and to a process for preparing a polyester film using the same, which is economical, environmentally friendly, and excellent in surface hardness, chemical resistance, and so on.

## Description

### Technical Field

An embodiment relates to a polyester resin, which not only has a low heat of crystallization and is excellent in calendering processability, but is also economical and environmentally friendly, and to a process for preparing the same. In addition, another embodiment relates to a process for preparing a copolymerized polyester film by a calendering process of the polyester resin, which film is economical, environmentally friendly, and excellent in surface hardness, UV resistance, and so on, and to a film prepared thereby. Furthermore, still another embodiment relates to a polyester resin composition for calendering, which has a low heat of crystallization and is excellent in calendering processability, and to a process for preparing a polyester film using the same, which film is economical, environmentally friendly, and excellent in surface hardness, chemical resistance, and so on.

### Background Art

A calendering process is a process for molding a film, a sheet, and the like using a calender-that is, a rolling machine in which a plurality of heating rolls are arranged. The calendering process is one of the representative methods of making films, sheets, and the like, because it is faster in production speed and easier to process in a thinner thickness than the extrusion process.

A polyethylene terephthalate (PET) resin among the commonly used resins has excellent physical properties for the price, but has a problem of poor calendering workability. In addition, although a polyethylene terephthalate glycol (PETG) resin can be used in a calendering process, its application is limited due to its high price. In the case where it is made into a film, its surface strength is so low that it is difficult to be used as a decorative sheet. Further, a polyvinyl chloride (PVC) resin is excellent in calendering workability, but it is neither environmentally friendly nor readily recyclable. In addition, although a polypropylene (PP) resin is excellent in calendering workability, it has difficulties in post-processes; thus, it is impossible to perform printing and laminating processes without corona and primer treatment. It also involves high energy consumption in the process and is not environmentally friendly. Therefore, there is a growing demand for a polymer resin that can be used in a calendering process and deal with the disadvantages of the resins discussed above.

For example, Korean Laid-open Patent Publication No. 2014-0109506 discloses a polyester composition for calendering, which comprises a terephthalic acid residue, a 1,4-cyclohexanedimethanol residue, and an ethylene glycol residue.

### Disclosure of Invention

### Technical Problem

However, in the case where a film is produced by calendering a polyester resin comprising an alicyclic diol residue such as a cyclohexanedimethanol residue as in the above-mentioned patent publication, the film would have a problem of poor surface hardness and chemical resistance.

Therefore, an embodiment aims to provide a polyester resin, which not only has a low heat of crystallization and is excellent in calendering processability, but is also economical and environmentally friendly, and a process for preparing the same. In addition, another embodiment aims to provide a process for preparing a copolymerized polyester film by calendering the polyester resin, which film is economical, environmentally friendly, and excellent in surface hardness and UV resistance, and a film prepared thereby. Furthermore, still another embodiment aims to provide a polyester resin composition for calendering, which has a low heat of crystallization and is excellent in calendering processability, and a process for preparing a polyester film using the same, which film is economical, environmentally friendly, and excellent in surface hardness and chemical resistance.

### Solution to Problem

In order to accomplish the above object, an embodiment provides a polyester resin for calendering, which comprises a dicarboxylic acid repeat unit and a diol repeat unit,
wherein the diol repeat unit comprises from greater than 10% by mole up to 90% by mole of a neopentyl glycol residue based on the total moles of the diol repeat unit,
the diol repeat unit does not comprise an alicyclic diol residue, and
the polyester resin has an intrinsic viscosity (IV) of 0.6 to 3.0 dl/g.

Another embodiment provides a process for preparing a polyester resin for calendering, which comprises:

(a) mixing a dicarboxylic acid component and a diol component in a molar ratio of 1:1.05 to 1:3.0 and performing an esterification reaction thereof; and

(b) polycondensing the esterification reaction product,

wherein the diol component comprises from greater than 10% by mole up to 90% by mole of neopentyl glycol based on the total moles of the diol component,

the diol component does not comprise an alicyclic diol, and

the polyester resin has an intrinsic viscosity (IV) of 0.6 to 3.0 dl/g.

Still another embodiment provides a process for preparing a copolymerized polyester film, which comprises:

(1) mixing a polyester resin comprising a dicarboxylic acid repeat unit and a diol repeat unit;

(2) kneading the mixed resin to gelate it;

(3) calendering the gelated resin to form a film;

(4) cooling the calendered film; and

(5) winding the cooled film,

wherein the diol repeat unit is composed of a linear or branched $C_2$ to $C_{10}$ diol residue, and

the polyester resin has an intrinsic viscosity (IV) of 0.6 to 3.0 dl/g.

Further, still another embodiment provides a copolymerized polyester film prepared by the process for preparing a copolymerized polyester film.

In addition, still another embodiment provides a polyester resin composition for calendering, which comprises a polyester resin and an additive,

wherein the polyester resin comprises a dicarboxylic acid repeat unit and a diol repeat unit,

the diol repeat unit is composed of a linear or branched $C_2$ to $C_{10}$ diol residue,

the diol repeat unit comprises 10 to 90% by mole of a neopentyl glycol residue based on the total moles of the diol repeat unit,

the polyester resin has an intrinsic viscosity (IV) of 0.6 to 3.0 dl/g, and

the polyester resin composition has a second process index of 0.5 to 10 as calculated by the following Equation 3:

[Equation 3]

Second process index = {{[(% by mole of diol residues other than ethylene glycol based on the total moles of the diol repeat unit) / 100] + intrinsic viscosity of the polyester resin (dl/g)} – heat of crystallization of the polyester resin (J/g)} x content of the additive (% by weight).

Still another embodiment provides a process for preparing a polyester film, which comprises:

(i) mixing a polyester resin comprising a dicarboxylic acid repeat unit and a diol repeat unit with an additive to prepare a polyester resin composition;

(ii) kneading the resin composition to gelate it;

(iii) calendering the gelated composition to form a film;

(iv) cooling the calendered film; and

(v) winding the cooled film,

wherein the diol repeat unit is composed of a linear or branched $C_2$ to $C_{10}$ diol residue,

the diol repeat unit comprises 10 to 90% by mole of a neopentyl glycol residue based on the total moles of the diol repeat unit,

the polyester resin has an intrinsic viscosity (IV) of 0.6 to 3.0 dl/g, and

the resin composition has a second process index of 0.5 to 10 as calculated by the following Equation 3:

[Equation 3]

Second process index = {{[(% by mole of diol residues other than ethylene glycol based on the total moles of the diol repeat unit) / 100] + intrinsic viscosity of the polyester resin (dl/g)} – heat of crystallization of the polyester resin (J/g)} x content of the additive (% by weight).

Further, still another embodiment provides a film, which comprises a base layer comprising the polyester resin or the polyester resin composition; and a printing layer laminated on the base layer.

**Advantageous Effects of Invention**

The polyester resin according to the embodiment has a specific intrinsic viscosity and a low heat of crystallization; therefore, it is excellent in calendering workability. Further, the polyester resin according to the embodiment can be utilized in various fields as an environmentally friendly material. Furthermore, the process for preparing a polyester resin according to the embodiment is capable of producing a polyester resin, which not only has a low heat of crystallization and is excellent in calendering processability, but is also economical and environmentally friendly.

In addition, according to the process for preparing a copolymerized polyester film according to the embodiment, it is possible to produce a film, which is excellent in surface hardness, chemical resistance, and so on. Further, the copolymerized polyester film prepared by the process is economical and environmentally friendly. Since the film is excellent in post-processability, it is possible to perform printing without primer treatment, and it can be readily subjected to an embossing process.

In addition, since the polyester resin composition for calendering according to the embodiment has a specific second process index and has a low heat of crystallization, it is excellent in calendering workability. Further, the polyester resin composition for calendering according to the embodiment is economical and serves as an environmentally friendly material; therefore, it can be utilized variously. Furthermore, according to the process for preparing a polyester film using the polyester resin composition for calendering, a polyester film, which is excellent in surface hardness, chemical resistance, and so on, can be produced. In addition, since the film is excellent in post-processability, it is possible to perform printing without primer treatment, and it can be readily subjected to an embossing process.

**Best Mode for Carrying out the Invention**

Hereinafter, the present invention will be described in detail with reference to embodiments. The embodiments can be modified into various forms as long as the gist of the invention is not altered.

In addition, throughout the description of the embodiments, the term "comprise" means that other elements may be included unless otherwise indicated.

Throughout the description of the embodiments, the terms first, second, and so on are used to describe various components. But the components should not be limited by the terms. The terms are used only for the purpose of distinguishing one component from another.

**Working Embodiment A**

An embodiment provides a polyester resin, which can be used in a calendering process, a film comprising the same, and a process for preparing the same.

<Polyester resin for calendering>

The polyester resin for calendering according to an embodiment comprises a dicarboxylic acid repeat unit and a diol repeat unit,
wherein the diol repeat unit comprises from greater than 10% by mole up to 90% by mole of a neopentyl glycol residue based on the total moles of the diol repeat unit,
the diol repeat unit does not comprise an alicyclic diol residue, and
the polyester resin has an intrinsic viscosity (IV) of 0.6 to 3.0 dl/g.

The dicarboxylic acid repeat unit may comprise a residue of terephthalic acid (TPA), isophthalic acid (IPA), naphthalene dicarboxylic acid (NDC), cyclohexanedicarboxylic acid (CHDA), succinic acid, glutaric acid, orthophthalic acid, adipic acid, azelaic acid, sebacic acid, decanedicarboxylic acid, 2,5-furandicarboxylic acid, 2,5-thiopendicarboxylic acid, 2,7-naphthalenedicarboxylic acid, 4,4'-bibenzoic acid, a derivative thereof, or a combination thereof. Specifically, the dicarboxylic acid repeat unit may comprise a residue of terephthalic acid, isophthalic acid, naphthalenedicarboxylic acid, cyclohexanedicarboxylic acid, or a combination thereof. More specifically, the dicarboxylic acid repeat unit may comprise a terephthalic acid residue. Even more specifically, the dicarboxylic acid repeat unit may be composed of a terephthalic acid residue.

The diol repeat unit comprises from greater than 10% by mole up to 90% by mole of a neopentyl glycol residue based on the total moles of the diol repeat unit. Specifically, the diol repeat unit may comprise from greater than 30% by mole up to 90% by mole, from greater than 30% by mole up to 80% by mole, or from greater than 30% by mole up to 70% by mole, of a neopentyl glycol residue based on the total moles of the diol repeat unit. More specifically, the diol repeat unit may comprise from greater than 30% by mole up to 60% by mole of a neopentyl glycol residue based on the total moles of the diol repeat unit.

If the content of the neopentyl glycol residue is within the above range, the processability by crystallization is excellent, the desired intrinsic viscosity is readily obtained, and the color features and the mechanical properties of the resin are excellent. Particularly, if the content of the neopentyl glycol residue is 90% by mole or less, the problem that the mechanical properties may become poor due to the difficulty in increasing the intrinsic viscosity over a certain level can be prevented.

The diol repeat unit may further comprise a residue of ethylene glycol (EG), diethylene glycol (DEG), 1,3-propanediol, 1,2-octanediol, 1,3-octanediol, 2,3-butanediol, 1,3-butanediol, 1,4-butanediol, 1,5-pentanediol, 2-butyl-2-ethyl-1,3-propanediol, 2,2-diethyl-1,5-pentanediol, 2,4-diethyl-1,5-pentanediol, 3-methyl-1,5-pentanediol, 1,1-dimethyl-1,5-pentanediol, polyether glycol, or a combination thereof. Specifically, the diol repeat unit may further comprise a residue of ethylene glycol, diethylene glycol, polyether glycol, or a combination thereof. More specifically, the diol repeat unit may further comprise an ethylene glycol residue.

Examples of the polyether glycol include polytetrahydrofuran (PTMEG), polyethylene glycol (PEG), polypropylene glycol (PPG), and the like.

In addition, the diol repeat unit may comprise 43 to 67% by mole of an ethylene glycol residue and greater than 30 up to 57% by mole of a neopentyl glycol residue based on the total moles of the diol repeat unit.

The dicarboxylic acid repeat unit is composed of a terephthalic acid residue, and the diol repeat unit is composed of (i) a neopentyl glycol residue and (ii) a residue of ethylene glycol, diethylene glycol, or a combination thereof. Specifically, the dicarboxylic acid repeat unit is composed of a terephthalic acid residue, and the diol repeat unit is composed of (i) a neopentyl glycol residue and (ii) an ethylene glycol residue.

The diol repeat unit may further comprise a linear diol residue. In the case where a film or a sheet is produced by calendering a polyester resin, which further comprises a linear diol residue, it may be excellent in chemical resistance and surface strength since packing is well performed.

Particularly, in the case where a printing layer is formed on a film, the printing layer is not easily peeled off, which may otherwise be caused by the external environment, by virtue of its excellent properties as chemical resistance and surface strength; thus, it can be used as a printing film, a decorative sheet, and the like.

The linear diol residue may be a linear $C_2$ to $C_{10}$ diol residue.

The diol repeat unit does not comprise an alicyclic diol residue. For example, the diol repeat unit does not comprise a cyclohexanedimethanol (CHDM) residue.

In the case where a film or a sheet is produced by calendering a polyester resin in which the diol repeat unit comprises an alicyclic diol residue, it may be poor in chemical resistance and surface strength since packing is not well performed due to the bulky structure of the alicyclic diol. In addition, since the dimensional stability of the film is poor, it may be difficult to expand the application of such film.

The polyester resin has an intrinsic viscosity (IV) of 0.6 to 3.0 dl/g. Specifically, the polyester resin may have an intrinsic viscosity (IV) of 0.68 to 3.0 dl/g or 0.7 to 0.9 dl/g. More specifically, the polyester resin may have an intrinsic viscosity (IV) of 0.7 to 0.8 dl/g. For example, the polyester resin may have an intrinsic viscosity (IV) of 0.72 to 0.78 dl/g.

If the polyester resin has an intrinsic viscosity within the above range, it is excellent in terms of the calendering processability, the retention rate of kinematic viscosity in the calendering process, and the uniformity of thickness of a sheet or a film.

The polyester resin may have a first process index of greater than 1.0 up to 1.7 as calculated by the following Equation 1. Specifically, the polyester resin may have a first process index of greater than 1.0 up to 1.55. More specifically, the polyester resin may have a first process index of greater than 1.0 up to less than 1.4. Even more specifically, the polyester resin may have a first process index of 1.05 up to 1.35.

[Equation 1]

First process index = {(% by mole of diol residues other than ethylene glycol based on the total moles of the diol repeat unit) / 100} + intrinsic viscosity of the polyester resin (dl/g).

The process index is the sum of the content of the diol residues in percent by mole other than ethylene glycol and the intrinsic viscosity of the polyester resin, which is an index capable of indicating the calendering processability.
If the polyester resin has a first process index within the above range, it is suitable for calendering process since it would produce a sheet that is excellent in transparency, thickness uniformity, and dimensional stability.

<Film>

Another embodiment provides a film, which comprises a base layer comprising the polyester resin; and a printing layer laminated on the base layer.
The average thickness of the base layer may be the thickness of the base layer of a typical printing film or a decorative sheet.
Furthermore, the printing layer may be a printing layer made of a common material that is comprised in a decorative sheet or the like. The printing layer may be formed on the base layer in a conventional manner. In addition, the average thickness of the printing layer may be the thickness of the printing layer of a typical printing film or a decorative sheet.

<Process for preparing a polyester resin for calendering>

The process for preparing a polyester resin for calendering according to another embodiment comprises:

(a) mixing a dicarboxylic acid component and a diol component in a molar ratio of 1:1.05 to 1:3.0 and performing an esterification reaction thereof; and
(b) polycondensing the esterification reaction product,

wherein the diol component comprises from greater than 10% by mole up to 90% by mole of neopentyl glycol based on the total moles of the diol component,
the diol component does not comprise an alicyclic diol, and
the polyester resin has an intrinsic viscosity (IV) of 0.6 to 3.0 dl/g.

Step (a)

In this step, a dicarboxylic acid component and a diol component are mixed in a molar ratio of 1:1.05 to 1:3.0 to perform an esterification reaction thereof.
The mixing may be performed such that the molar ratio of the dicarboxylic acid component to the diol component is 1:1.05 to 1:2.0. Specifically, the mixing may be performed such that the molar ratio of the dicarboxylic acid component to the diol component is 1:1.05 to 1:1.5.
If the molar ratio of the dicarboxylic acid component to the diol component is within the above range, the esterification reaction proceeds stably, sufficient ester oligomers can be formed, and it is suitable for the neopentyl glycol component to exhibit its features.
The kinds and amounts of the dicarboxylic acid component and the diol component are the same as those of the dicarboxylic acid repeat unit and the diol repeat unit as described above.
In the case where a polyester resin for calendering is prepared from the above-described components, it is economical in terms of the cost, and the polyester resin thus produced is environmentally friendly, readily recyclable, and excellent in dimensional stability.
When the polyester resin for calendering is prepared, an acrylic compound is not used. In the case where an acrylic compound is used in the reaction, such foreign matter as undissolved gels may be formed in the resin.
The polyester resin produced by the process for preparing a polyester resin has an intrinsic viscosity (IV) of 0.6 to 3.0 dl/g. Specifically, the polyester resin may have an intrinsic viscosity (IV) of 0.68 to 3.0 dl/g or 0.7 to 0.9 dl/g. More specifically, the polyester resin may have an intrinsic viscosity (IV) of 0.7 to 0.8 dl/g. For example, the polyester resin may have an intrinsic viscosity (IV) of 0.72 to 0.78 dl/g.

In the case where a polyester resin is prepared from the above-described components in the specified amounts, it may be easy for the polyester resin to have an intrinsic viscosity of the above-described range.

If the polyester resin has an intrinsic viscosity within the above range, it is excellent in terms of the calendering processability, the retention rate of kinematic viscosity in the calendering process, and the uniformity of thickness of a sheet or a film.

Step (b)

In this step, the esterification reaction product is polycondensed.

The polycondensation may be carried out under the conditions of a temperature of 230 to 300°C and a pressure of 0.1 to 3.0 kg/cm$^2$. Specifically, the polycondensation may be carried out at a temperature of 240 to 295°C and a pressure of 0.2 to 2.9 kg/cm$^2$.

The polycondensation may be carried out in the presence of a polycondensation catalyst, a stabilizer, a colorant, a dispersant, an antiblocking agent, an electrostatic agent, an antistatic agent, an antioxidant, a heat stabilizer, a UV blocking agent, a photoinitiator, or a combination thereof well known to those skilled in the art. Such additives may be used within a range that does not impair the effect of the embodiment. Specifically, the polycondensation may be carried out in the presence of a polycondensation catalyst and a stabilizer.

The polycondensation catalyst may comprise an alkali metal, an alkaline earth metal, antimony, titanium, manganese, cobalt, cerium, germanium, or a combination thereof. Specifically, the polycondensation catalyst may be an antimony-based compound.

The polycondensation catalyst may be used in an amount of 50 to 1,000 ppm based on the total weight of the polyester resin. Specifically, the polycondensation catalyst may be used in an amount of 50 to 500 ppm based on the total weight of the polyester resin. If the amount of the polycondensation catalyst is within the above range, the polycondensation reaction rate is accelerated and the side reaction is suppressed, whereby the transparency of the resin thus produced can be improved.

The stabilizer may comprise a phosphorus-based stabilizer. The phosphorus-based stabilizer may comprise, but is not limited to, phosphoric acid, trimethyl phosphate, triethyl phosphate, triphenyl phosphate, triethyl phosphonoacetate, hindered phenol, or a combination thereof.

The stabilizer may be used in an amount of 3,000 ppm or less based on the total weight of the polyester resin. Specifically, the stabilizer may be used in an amount of 1 to 2,500 ppm based on the total weight of the polyester resin.

The colorant may include cobalt acetate, cobalt propionate, an organic compound colorant, an inorganic compound colorant, a dye, or a combination thereof. Specifically, the colorant may be cobalt acetate, cobalt propionate, an inorganic compound colorant, or a combination thereof.

The colorant may be used in an amount of 1 to 500 ppm based on the total weight of the polyester resin. Specifically, the colorant may be used in an amount of 1 to 200 ppm based on the total weight of the polyester resin.

**Working Embodiment B**

An embodiment provides a process for preparing a copolymerized polyester film, which comprises a calendering step, and a film produced thereby.

<Process for preparing a copolymerized polyester film>

The process for preparing a copolymerized polyester film according to another embodiment comprises:

(1) mixing a polyester resin comprising a dicarboxylic acid repeat unit and a diol repeat unit;
(2) kneading the mixed resin to gelate it;
(3) calendering the gelated resin to form a film;
(4) cooling the calendered film; and
(5) winding the cooled film.

Steps (1) to (5) may be sequentially carried out to produce the copolymerized polyester film.

Step (1)

In this step, a polyester resin comprising a dicarboxylic acid repeat unit and a diol repeat unit is mixed.

The dicarboxylic acid repeat unit may comprise a residue of terephthalic acid (TPA), isophthalic acid (IPA), naphthalenedicarboxylic acid (NDC), cyclohexanedicarboxylic acid (CHDA), succinic acid, glutaric acid, orthophthalic acid, adipic acid, azelaic acid, sebacic acid, decanedicarboxylic acid, 2,5-furandicarboxylic acid, 2,5-thiopendicarboxylic acid, 2,7-naphthalenedicarboxylic acid, 4,4'-bibenzoic acid, a derivative thereof, or a combination thereof. Specifically, the dicarboxylic acid repeat unit may comprise a residue of terephthalic acid, isophthalic acid, naphthalenedicarboxylic acid, cyclohexanedicarboxylic acid, or a combination thereof. More specifically, the dicarboxylic acid repeat unit may comprise a terephthalic acid residue. Even more specifically, the dicarboxylic acid repeat unit may be composed of a terephthalic acid residue.

The diol repeat unit is composed of a linear or branched $C_2$ to $C_{10}$ diol residue. That is, the diol repeat unit does not comprise an alicyclic diol residue or an aromatic diol residue.

The diol repeat unit may comprise, for example, a residue of ethylene glycol (EG), diethylene glycol (DEG), neopentyl glycol, 1,3-propanediol, 1,2-octanediol, 1,3-octanediol, 2,3-butanediol, 1,3-butanediol, 1,4-butanediol, 1,5-pentanediol, 2-butyl-2-ethyl-1,3-propanediol, 2,2-diethyl-1,5-pentanediol, 2,4-diethyl-1,5-pentanediol, 3-methyl-1,5-pentanediol, 1,1-dimethyl-1,5-pentanediol, 1,6-hexanediol, 2-ethyl-3-methyl-1,5-hexanediol, 2-ethyl-3-ethyl-1,5-hexanediol, 1,7-heptanediol, 2-ethyl-3-methyl-1,5-heptanediol, 2-ethyl-3-ethyl-1,6-heptanediol, 1,8-octanediol, 1,9-nonanediol, 1,10-decanediol, a derivative thereof, or a combination thereof. Specifically, the linear or branched $C_2$ to $C_{10}$ diol residue may comprise a residue of ethylene glycol (EG), diethylene glycol (DEG), neopentyl glycol, or a combination thereof.

In the case where a film or a sheet is produced by calendering a polyester resin, which comprises the linear or branched $C_2$ to $C_{10}$ diol residue, it may be excellent in chemical resistance and surface strength since packing is well performed.

According to an embodiment, the diol repeat unit may comprise from greater than 10% by mole up to 90% by mole of a neopentyl glycol residue based on the total moles of the diol repeat unit. Specifically, the diol repeat unit may comprise from greater than 30% by mole up to 90% by mole, from greater than 30% by mole up to 80% by mole, or from greater than 30% by mole up to 70% by mole, of a neopentyl glycol residue based on the total moles of the diol repeat unit. More specifically, the diol repeat unit may comprise from greater than 30% by mole up to 60% by mole of a neopentyl glycol residue based on the total moles of the diol repeat unit.

If the content of the neopentyl glycol residue is within the above range, the processability by crystallization is excellent, the desired intrinsic viscosity is readily obtained, and the color features and the mechanical properties of the resin are excellent. Particularly, if the content of the neopentyl glycol residue is 90% by mole or less, the problem that the mechanical properties may become poor due to the difficulty in increasing the intrinsic viscosity over a certain level can be prevented.

Preferably, the diol repeat unit does not comprise an alicyclic diol residue or an aromatic diol residue. Specifically, the diol repeat unit does not comprise a cyclohexanedimethanol (CHDM) residue.

In the case where a film or a sheet is produced by calendering a polyester resin in which the diol repeat unit comprises an alicyclic diol residue or an aromatic diol residue, it may be poor in chemical resistance and surface strength since packing is not well performed due to the bulky structure of the alicyclic diol or the aromatic diol. In addition, since the dimensional stability of the film is poor, it may be difficult to expand the application of such film.

When the polyester resin is prepared, an acrylic compound is not used. In the case where an acrylic compound is used in the reaction, such foreign matter as undissolved gels may be formed in the resin.

According to an embodiment, the polyester resin comprises a dicarboxylic acid repeat unit and a diol repeat unit. The dicarboxylic acid repeat unit may be composed of a terephthalic acid residue, and the diol repeat unit may be composed of (i) a neopentyl glycol residue and (ii) a residue of ethylene glycol, diethylene glycol, or a combination thereof. Specifically, the dicarboxylic acid repeat unit may be composed of a terephthalic acid residue, and the diol repeat unit may be composed of (i) a neopentyl glycol residue and (ii) an ethylene glycol residue.

In the case where the dicarboxylic acid repeat unit in the polyester resin is composed of a terephthalic acid residue and the diol repeat unit is composed of (i) a neopentyl glycol residue and (ii) a residue of ethylene glycol, diethylene glycol, or a combination thereof, the polyester resin may have a reduced whitening phenomenon, a low haze of 8% or less, and excellent dimensional stability.

The polyester resin has an intrinsic viscosity (IV) of 0.6 to 3.0 dl/g. Specifically, the polyester resin may have an intrinsic viscosity (IV) of 0.68 to 3.0 dl/g, 0.7 to 2.5 dl/g, 0.7 to 2.0 dl/g, 0.7 to 1.5 dl/g, 0.7 to 1.2 dl/g, or 0.7 to 0.9 dl/g. More specifically, the polyester resin may have an intrinsic viscosity (IV) of 0.7 to 0.8 dl/g. For example, the polyester resin may have an intrinsic viscosity (IV) of 0.72 to 0.78 dl/g.

If the polyester resin has an intrinsic viscosity within the above range, it is excellent in terms of the calendering processability, the retention rate of kinematic viscosity in the calendering process, and the uniformity of thickness of a sheet or a film.

The polyester resin may have a first process index of greater than 1.0 up to 1.7 as calculated by the following Equation 1. Specifically, the polyester resin may have a first process index of greater than 1.0 up to 1.55. More specifically, the polyester resin may have a first process index of greater than 1.0 to less than 1.4.

[Equation 1]

First process index = {(% by mole of diol residues other than ethylene glycol based on the total moles of the diol repeat unit) / 100} + intrinsic viscosity of the polyester resin (dl/g).

The process index is the sum of the content of the diol residues in percent by mole other than ethylene glycol and the intrinsic viscosity of the polyester resin, which is an index capable of indicating the calendering processability.

If the polyester resin has a first process index within the above range, it is suitable for calendering process since it would produce a sheet that is excellent in transparency, thickness uniformity, and dimensional stability.

The polyester resin may have a heat of crystallization of 2.5 J/g or less. Specifically, the polyester resin may have a heat of crystallization of 2.0 J/g or less, 1.8 J/g or less, 1.5 J/g or less, 1.2 J/g or less, 1.0 J/g or less, 0.7 J/g or less, or 0.5 J/g or less. For example, the polyester resin may have a heat of crystallization of 0 to 2.2 J/g, 0 to 2 J/g, 0 to 1.0 J/g, or 0 to 0.8 J/g. If the polyester resin has a heat of crystallization within the above range, the calendering workability is improved.

The polyester resin may have a viscosity retention rate at the time of shearing of 0.1 to 20 Nm. Specifically, the polyester resin may have a viscosity retention rate at the time of shearing of 0.1 to 18 Nm or 0.2 to 15 Nm. The viscosity retention rate at the time of shearing was measured with a Brabender, and the measurement conditions refer to the difference in shear stress after 10 minutes and 30 minutes at 190°C and 50 rpm.

The viscosity retention rate at the time of shearing is a property for evaluating the process stability in the calendering process-that is, the possibility of producing a sheet or a film stably without breakage. If the viscosity retention rate at the time of shearing of the polyester resin is within the above range, the stability of the calendering process of the resin is maximum.

The polyester resin satisfies the various features as described above, so that a film produced from the polyester resin is suitable for the calendering process, whereby it is possible to produce a polyester film that is excellent in surface hardness, chemical resistance, and the like.

This step may comprise (1-1) mixing a dicarboxylic acid component and a diol component in a molar ratio of 1:1.05 to 1:3.0 and performing an esterification reaction thereof; and (1-2) polycondensing the esterification reaction product.

In the step (1-1), the dicarboxylic acid component and the diol component are mixed in a molar ratio of 1:1.05 to 1:3.0 to perform an esterification reaction thereof. Specifically, the dicarboxylic acid component and the diol component may be mixed in a molar ratio of 1:1.05 to 1:2.0 to perform an esterification reaction thereof. More specifically, the dicarboxylic acid component and the diol component may be mixed in a molar ratio of 1:1.05 to 1:1.5 to perform an esterification reaction thereof. If the molar ratio of the dicarboxylic acid component to the diol component is within the above range, the esterification reaction proceeds stably, sufficient ester oligomers can be formed, and it is suitable for the neopentyl glycol component to exhibit its features.

The polycondensation in the step (1-2) may be carried out under the conditions of a temperature of 230 to 300°C and a pressure of 0.1 to 3.0 kg/cm$^2$. Specifically, the polycondensation may be carried out under the conditions of a temperature of 240 to 295°C and a pressure of 0.2 to 2.9 kg/cm$^2$.

The polycondensation may be carried out in the presence of a polycondensation catalyst, a stabilizer, a colorant, a dispersant, an antiblocking agent, an electrostatic agent, an antistatic agent, an antioxidant, a heat stabilizer, a UV blocking agent, a photoinitiator, or a combination thereof well known to those skilled in the art. Such additives may be used within a range that does not impair the effect of the embodiment. Specifically, the polycondensation may be carried out in the presence of a polycondensation catalyst, a stabilizer, or a combination thereof.

The polycondensation catalyst may comprise, but is not limited to, an alkali metal, an alkaline earth metal, antimony, titanium, manganese, cobalt, cerium, germanium, or any combination thereof. Specifically, an antimony-based compound may be used as the polycondensation catalyst.

The polycondensation catalyst may be used in an amount of 50 to 1,000 ppm based on the total weight of the polyester resin. Specifically, the polycondensation catalyst may be used in an amount of 50 to 500 ppm based on the total weight of the polyester resin. If the amount of the polycondensation catalyst is within the above range, the polycondensation reaction rate is accelerated and the side reaction is suppressed, whereby the transparency of the resin thus produced can be improved.

The stabilizer may comprise a phosphorus-based stabilizer. The phosphorus-based stabilizer may comprise phosphoric acid, trimethyl phosphate, triethyl phosphate, triphenyl phosphate, triethyl phosphonoacetate, hindered phenol, or a combination thereof.

The stabilizer may be used in an amount of 3,000 ppm or less based on the total weight of the polyester resin. Specifically, the stabilizer may be used in an amount of 1 to 2,500 ppm based on the total weight of the polyester resin.

The colorant may comprise, but is not limited to, cobalt acetate, cobalt propionate, an organic compound colorant, an inorganic compound colorant, a dye, or a combination thereof. Specifically, the colorant may be cobalt acetate, cobalt propionate, an inorganic compound colorant, or a combination thereof.

The colorant may be used in an amount of 1 to 500 ppm based on the total weight of the polyester resin. Specifically, the colorant may be used in an amount of 1 to 200 ppm based on the total weight of the polyester resin.

A step of mixing the polyester resin and an additive after the step (1) and before the step (2) may be included.

The additive may comprise at least one selected from the group consisting of a fatty acid, a fatty acid salt, a metal salt of an organic acid, a fatty acid ester, a hydrocarbon wax, an ester wax, a phosphoric acid ester, an amide, a modified polyolefin wax, talc, and an acrylic copolymer.

In the case where the polyester resin is mixed with the additive, it is possible to produce the effects of preventing the rolls from being stuck during the calendering process, enhancing the flowability of the resin, and improving the uniformity of the thickness.

In the case where the polyester resin is mixed with the additive, the flowability of the resin is improved and the crystallization is delayed by virtue of the additive, whereby the heat of crystallization of the resin can be lowered as compared with a composition devoid of such additive.

The polyester resin may be mixed with the additive in a weight ratio of 100:0.5 to 100:5.

A high-speed mixer (for example, a Henshell mixer) may be used to mix the polyester resin. The polyester resin may be pelletized, and the pelletized polyester resin may be put into a high-speed mixer and mixed for 30 to 300 seconds at a temperature range of 20 to 40°C. At this time, the above-mentioned additive may be mixed with the resin, but the present invention is not limited thereto.

Step (2)

In this step, the mixed resin is kneaded and gelated.

The step (2) comprises at least one of the steps: (2-1) gelating the mixed resin using a planetary extruder or a Banbury intensive mixer; (2-2) homogenizing the gelated resin using a mixing roll; and (2-3) homogenizing the gelated resin using a warming roll prior to feeding into a calender roll. Specifically, the step (2) may be performed in the order of steps (2-1), (2-2), and (2-3).

The step (2-1) may be performed at 180 to 230°C. In addition, the step (2-2) may be carried out at 90 to 130°C. Further, the step (2-3) may be carried out at 90 to 130°C.

Step (3)

In this step, the gelated resin is calendered to form a film.

The calendering may comprise the step of calendering a film using a calender roll. Specifically, the step of calendering a film using a calender roll may be performed at a rate of 10 to 40 m/min at 145 to 210°C, but is not limited thereto.

This step may further comprise the step of peeling the calendered film from the calender roll using take-off rolls and adjusting the thickness and smoothness of the film. The step of adjusting the thickness and smoothness of the film may be performed at a rate of 30 to 70 m/min at 120 to 170°C, but is not limited thereto.

A step of treating the surface of the calendered film may be further included after the step (3) and before the step (4), which surface treatment step may improve the windability of the film and enables to materialize a matte property.

The surface treatment comprises, for example, an embossing process and the like. The embossing process refers to a process in which heat and pressure are applied to the surface of a film to form a concave or convex shape. For example, the embossing process may be carried out in a temperature range of 30 to 90°C using an embossing unit. In addition, the surface treatment rate of the film may be 45 to 80 m/min, but is not limited thereto.

Step (4)

In this step, the calendered film is cooled.

If the step (3) comprises the step of embossing (i.e., surface-treating) the calendered film, a step of peeling the film from the embossing unit using an annealing roll may be performed in advance. In such event, the peeling of the film may be carried out at a temperature of 35 to 80°C at a rate of 55 to 90 m/min, but is not limited thereto.

The cooling may be performed using a cooling roll at a rate of 55 to 95 m/min in a temperature range of 35 to 50°C.

Subsequently, (4-1) cutting the width of the cooled film using a side trimming device; and (4-2) measuring the thickness of the film thus produced using a thickness gauge may be further included.

In the relationship between the temperature of the step (3) and the temperature of the step (4), the ΔT as calculated by the following Equation 2 may be 20 to 225°C. Specifically, the ΔT may be 25 to 220°C, 30 to 215°C, or 35 to 210°C. If the value of ΔT satisfies the above range, the shrinkage rate of the film is minimized, and the thickness smoothness of the film is maximized.

[Equation 2]

$$\Delta T = T1 - T2$$

T1: the maximum temperature (°C) of the step (3)
T2: the minimum temperature (°C) of the step (4)

Step (5)

In this step, the cooled film is wound.
The cooled film may be wound at a speed of 55 to 95 m/min using a winder, but is not limited thereto.

<Copolymer polyester film>

The copolymerized polyester film according to another embodiment is produced according to the process for preparing a copolymerized polyester film.
The film may have a surface hardness of B to HB. The surface hardness was measured by an electric pencil hardness tester method. The pencil used was Mitsubishi, 6B to 9H (17 each), which was measured at the same load (200 g) and the same speed at 45°.
The film may have a transparency of 30% to 75%. Specifically, the film may have a transparency of 32% to 73%, 33% to 70%, 35% to 70%, 35% to 68%, or 40% to 65%. The transparency was measured by a haze meter method, in which the thickness of the sample film was 0.2 mm, and the sample was subjected to embossing at a late stage in the calendering process. The numerical value of transparency does not reach 100%, and the higher the value, the more transparent.
The film may have a surface tension of 37 to 43 mN/m. Specifically, the film may have a surface tension of 38 to 42 mN/m or 39 to 41 mN/m. The surface tension was measured by a contact angle measurement, and the lower the contact angle, the higher the surface tension of the film. In addition, the higher the surface tension of the film, the more advantageous in printing, coating, and the like in the subsequent process.
The film may have a chrominance (ΔE) of 0.2 to 1.9 as measured after standing at 63 ± 3°C and a relative humidity of 50 ± 5% for 500 hours. Specifically, the film may have a chrominance of be 0.25 to 1.85, 0.25 to 1.58, 0.3 to 1.9, 0.3 to 1.85, 0.3 to 1.58, 0.3 to 1.2, or 0.35 to 1.0.
The chrominance was measured by the accelerated weathering test (KS M ISO 4892-2). The chrominance is an index of UV resistance. If the chrominance of a film satisfies the above range, it means that its UV resistance is excellent.
As described above, the copolymerized polyester film satisfying the combination of various properties is excellent in post-processability. Specifically, the copolymerized polyester film can be printed without primer treatment and is excellent in embossing processability so that the surface treatment of the film can be facilitated.

**Working Embodiment C**

Another embodiment provides a polyester resin composition for calendering, a film comprising the resin composition, and a process for preparing a polyester film using the same.

<Polyester resin composition for calendering>

The polyester resin composition for calendering according to an embodiment comprises a polyester resin and an additive.
The polyester resin comprises a dicarboxylic acid repeat unit and a diol repeat unit.
The kinds and contents of the dicarboxylic acid repeat unit and the diol repeat unit are as described in the above Working Embodiment B.
Preferably, the diol repeat unit does not comprise an alicyclic diol residue or an aromatic diol residue. Specifically, the diol repeat unit does not comprise a cyclohexanedimethanol (CHDM) residue.
In the case where a film or a sheet is produced by calendering a polyester resin in which the diol repeat unit comprises an alicyclic diol residue or an aromatic diol residue, it may be poor in chemical resistance and surface strength since packing is not well performed due to the bulky structure of the alicyclic diol or the aromatic diol. In addition, since the dimensional stability of the film is poor, it may be difficult to expand the application of such film.

The diol repeat unit comprises 10 to 90% by mole of a neopentyl glycol residue based on the total moles of the diol repeat unit. Specifically, the diol repeat unit may comprise 20 to 90% by mole of a neopentyl glycol residue based on the total moles of the diol repeat unit. More specifically, the diol repeat unit may comprise 20 to 85% by mole, 23 to 84% by mole, or 24 to 83% by mole, of a neopentyl glycol residue based on the total moles of the diol repeat unit.

If the content of the neopentyl glycol residue is within the above range, the processability by crystallization is excellent, a resin having the desired intrinsic viscosity is readily obtained, and the color features and the mechanical properties of the resin are excellent. Particularly, if the content of the neopentyl glycol residue is 90% by mole or less, the problem that the mechanical properties may become poor due to the difficulty in increasing the intrinsic viscosity over a certain level can be prevented.

According to an embodiment, the polyester resin may comprise a dicarboxylic acid repeat unit and a diol repeat unit. The dicarboxylic acid repeat unit may be composed of a terephthalic acid residue, and the diol repeat unit may be composed of (i) a neopentyl glycol residue and (ii) a residue of ethylene glycol, diethylene glycol, or a combination thereof. Specifically, the dicarboxylic acid repeat unit may be composed of a terephthalic acid residue, and the diol repeat unit may be composed of (i) a neopentyl glycol residue and (ii) an ethylene glycol residue.

If the dicarboxylic acid repeat unit in the polyester resin is composed of a terephthalic acid residue and the diol repeat unit is composed of (i) a neopentyl glycol residue and (ii) a residue of ethylene glycol, diethylene glycol, or a combination thereof, the polyester resin may have a reduced whitening phenomenon and a low haze of 15% or less and is excellent in dimensional stability.

The additive may comprise, but is not limited to, at least one selected from the group consisting of a fatty acid, a fatty acid salt, a metal salt of an organic acid, a fatty acid ester, an amide, a hydrocarbon wax, an ester wax, a phosphoric acid ester, a polyolefin wax, a modified polyolefin wax, talc, and an acrylic copolymer.

Alternatively, the additive may be composed of at least one selected from the group consisting of a fatty acid, a fatty acid salt, a metal salt of an organic acid, a fatty acid ester, an amide, a hydrocarbon wax, an ester wax, a phosphoric acid ester, a polyolefin wax, a modified polyolefin wax, talc, and an acrylic copolymer.

The weight ratio of the polyester resin to the additive may be 100:0.5 to 100:5. Specifically, the weight ratio of the polyester resin to the additive may be 100:0.5 to 100:4.5, 100:0.6 to 100:4.2, 100:0.8 to 100:4.0, or 100:0.9 to 100:3.8.

If the weight ratio of the polyester resin to the additive is within the above range, the resin is excellent in calendering processability, and a film produced therefrom has a low haze and a reduced orange peel phenomenon on its surface. Specifically, if the additive is used in a small amount, a film cannot be produced; and if the additive is used in an excess amount, the additive migrates to the surface of the film, resulting in a defect of increased haze.

The polyester resin may have an intrinsic viscosity (IV) of 0.6 to 3.0 dl/g. Specifically, the polyester resin may have an intrinsic viscosity (IV) of 0.6 to 2.5 dl/g, 0.6 to 2.0 dl/g, 0.6 to 1.5 dl/g, 0.6 to 1.0 dl/g, 0.62 to 1.5 dl/g, 0.64 to 1.2 dl/g, or 0.66 to 0.85 dl/g.

If the polyester resin has an intrinsic viscosity within the above range, it is excellent in terms of the calendering processability, the retention rate of kinematic viscosity in the calendering process, and the uniformity of thickness of a sheet or a film produced therefrom.

The polyester resin may have a first process index of 0.8 to 2.0 as calculated by the following Equation 1. Specifically, the polyester resin may have a first process index of 0.8 to 1.8, 0.8 to 1.7, 0.85 to 1.6, or 0.9 to 1.6.

[Equation 1]

First process index = {(% by mole of diol residues other than ethylene glycol based on the total moles of the diol repeat unit) / 100} + intrinsic viscosity of the polyester resin (dl/g).

The first process index is the sum of the content of the diol residues in percent by mole other than ethylene glycol and the intrinsic viscosity of the polyester resin, which is an index capable of indicating the calendering processability.

If the polyester resin has a first process index within the above range, it is suitable for calendering process since it would produce a sheet that is excellent in transparency, thickness uniformity, and dimensional stability.

The polyester resin composition may have a second process index of 0.5 to 10 as calculated by the following Equation 3. Specifically, the polyester resin may have a second process index of 0.5 to 9, 0.6 to 9, 0.7 to 8.5, 0.7 to 8, 0.7 to 7, or 0.7 to 6.

[Equation 3]

Second process index = {{[(% by mole of diol residues other than ethylene glycol based on the total moles of the diol repeat unit) / 100] + intrinsic viscosity of the polyester resin (dl/g)} − heat of crystallization of the polyester resin (J/g)} x content of the additive (% by weight).

The second process index refers to a calendering process index, which relates to the improvement in the processability of the resin and the film as well as the improvement in the film surface and the optical properties according to the addition of the additive.

If the second process index of the polyester resin is within the above range, the elution of the additive from the resin is minimized, the calendering processability is excellent by preventing the composition from being stuck to the rolls, the film haze is low due to low content of foreign matter, and the orange peel phenomenon on the surface of the produced film is reduced by virtue of the improved smoothness of the resin.

The polyester resin may have a heat of crystallization of 2.5 J/g or less. Specifically, the polyester resin may have a heat of crystallization of 2.0 J/g or less, 1.8 J/g or less, 1.5 J/g or less, 1.2 J/g or less, 1.0 J/g or less, 0.7 J/g or less, or 0.5 J/g or less. For example, the polyester resin may have a heat of crystallization of 0 to 2.2 J/g, 0 to 2 J/g, 0 to 1.0 J/g, or 0 to 0.8 J/g.

If the polyester resin has a heat of crystallization within the above range, it is prevented that a film is not formed along the rolls and detached from the rolls due to the reduced flexibility of the film caused by crystallization of the resin, thereby making the process inoperable.

The polyester resin composition may have a viscosity retention rate at the time of shearing of 0.1 to 20 Nm. Specifically, polyester resin composition may have a viscosity retention rate at the time of shearing of 0.1 to 18 Nm or 0.2 to 15 Nm.

The viscosity retention rate at the time of shearing was measured with a Brabender, which indicates the difference in shear stress after 10 minutes and 30 minutes at 190°C and 50 rpm. The viscosity retention rate at the time of shearing is a property for evaluating the production stability in the calendering process-that is, the possibility of producing a sheet or a film stably without breakage. If the viscosity retention rate at the time of shearing is within the above range, the stability of the calendering process is excellent so that a sheet or a film can be stably produced without breakage.

If the viscosity retention rate at the time of shearing of the polyester resin is within the above range, the stability of the calendering process becomes maximum.

Various features of the above-mentioned polyester resin, additives, and composition may be combined.

For example, the polyester resin composition for calendering may comprise a polyester resin and an additive, wherein the polyester resin comprises a dicarboxylic acid repeat unit and a diol repeat unit, the diol repeat unit is composed of a linear or branched $C_2$ to $C_{10}$ diol residue, the diol repeat unit comprises a neopentyl glycol residue in an amount of 10 to 90% by mole based on the total moles of the diol repeat unit, the intrinsic viscosity (IV) of the polyester resin is 0.6 to 3.0 dl/g, and the resin composition has a second process index of 0.5 to 10 as calculated by Equation 3.

The polyester resin composition satisfies the various features as described above, so that a film produced from the polyester resin composition is suitable for the calendering process, whereby it is possible to produce a polyester film that is excellent in surface hardness, chemical resistance, and the like.

<Film>

Another embodiment provides a film, which comprises a base layer comprising the polyester resin composition; and a printing layer laminated on the base layer.

The average thickness of the base layer may be the thickness of the base layer of a typical printing film or a decorative sheet.

Furthermore, the printing layer may be a printing layer made of a common material comprised in a decorative sheet or the like. The printing layer may be formed on the base layer in a conventional manner. In addition, the average thickness of the printing layer may be the thickness of the printing layer of a typical printing film or a decorative sheet.

<Process for preparing a polyester film>

The process for preparing a polyester film according to an embodiment comprises:

(i) mixing a polyester resin comprising a dicarboxylic acid repeat unit and a diol repeat unit with an additive to prepare a polyester resin composition;
(ii) kneading the resin composition to gelate it;
(iii) calendering the gelated composition to form a film;
(iv) cooling the calendered film; and
(v) winding the cooled film.

The process for preparing a polyester film may be performed in the order of steps (i) to (v).

Step (i)

In this step, a polyester resin comprising a dicarboxylic acid repeat unit and a diol repeat unit is mixed with an additive to prepare a polyester resin composition.
The dicarboxylic acid repeat unit, the diol repeat unit, the polyester resin, the additive, and the polyester resin composition are as described above.
The weight ratio of the polyester resin to the additive may be 100:0.5 to 100:5. Specifically, the weight ratio of the polyester resin to the additive may be 100:0.5 to 100:4.5, 100:0.6 to 100:4.2, 100:0.8 to 100:4.0, or 100:0.9 to 100:3.8.
The additive may comprise, but is not limited to, at least one selected from the group consisting of a fatty acid, a fatty acid salt, a metal salt of an organic acid, a fatty acid ester, an amide, a hydrocarbon wax, an ester wax, a phosphoric acid ester, a polyolefin wax, a modified polyolefin wax, talc, and an acrylic copolymer.
The polyester resin is mixed with the additive, thereby producing the effects of preventing the rolls from being stuck during the calendering process, improving the flowability of the resin, and improving the uniformity of the thickness.
A high-speed mixer (for example, a Henshell mixer) may be used to mix the polyester resin with the additive to thereby prepare a polyester resin composition. The polyester resin composition may be pelletized, and the pelletized polyester resin composition may be put into a high-speed mixer and mixed for 30 to 300 seconds in a temperature range of 20 to 40°C.
This process for preparing a polyester resin may comprise (i-1) mixing the dicarboxylic acid component and the diol component in a molar ratio of 1:1.05 to 1:3.0 and performing an esterification reaction thereof; and (i-2) polycondensing the esterification reaction product.
When the polyester resin is prepared, an acrylic compound is not used. In the case where an acrylic compound is used in the reaction, such foreign matter as undissolved gels may be formed in the resin.
In the step (i-1), the dicarboxylic acid component and the diol component may be mixed in a molar ratio of 1:1.05 to 1:3.0 to perform an esterification reaction thereof. Specifically, in the step (i-1), the dicarboxylic acid component and the diol component may be mixed in a molar ratio of 1:1.05 to 1:2.0 to perform an esterification reaction thereof. More specifically, in the step (i-1), the dicarboxylic acid component and the diol component may be mixed in a molar ratio of 1:1.05 to 1:1.5 to perform an esterification reaction thereof.
If the molar ratio of the dicarboxylic acid component to the diol component is within the above range, the esterification reaction proceeds stably, sufficient ester oligomers can be formed, and it is suitable for the neopentyl glycol component to materialize its features.
The step (i-2) may be carried out under the conditions of a temperature of 230 to 300°C and a pressure of 0.1 to 3.0 kg/cm$^2$. Specifically, the step (i-2) may be carried out under the conditions of a temperature of 240 to 295°C and a pressure of 0.2 to 2.9 kg/cm$^2$.
The step (i-2) may be carried out in the presence of a polycondensation catalyst, a stabilizer, a colorant, a dispersant, an antiblocking agent, an electrostatic agent, an antistatic agent, an antioxidant, a heat stabilizer, a UV blocking agent, a photoinitiator, or a combination thereof well known to those skilled in the art. Such additives may be used within a range that does not impair the effect of the embodiment.
The polycondensation may be carried out in the presence of a polycondensation catalyst, a stabilizer, or a combination thereof.
The polycondensation catalyst may comprise an alkali metal, an alkaline earth metal, antimony, titanium, manganese, cobalt, cerium, germanium, or any combination thereof. Specifically, an antimony-based compound may be used as the polycondensation catalyst.
The polycondensation catalyst may be used in an amount of 50 to 1,000 ppm based on the total weight of the polyester resin. Specifically, the polycondensation catalyst may be used in an amount of 50 to 500 ppm, or 50 to 400 ppm, based on the total weight of the polyester resin. If the amount of the polycondensation catalyst is within the above range, the polycondensation reaction rate is accelerated and the side reaction is suppressed, whereby the transparency of the resin thus produced can be improved.

The stabilizer may comprise a phosphorus-based stabilizer. The phosphorus-based stabilizer may comprise, but is not limited to, phosphoric acid, trimethyl phosphate, triethyl phosphate, triphenyl phosphate, triethyl phosphonoacetate, hindered phenol, or a combination thereof.

The stabilizer may be used in an amount of 3,000 ppm or less based on the total weight of the polyester resin. Specifically, the stabilizer may be used in an amount of 1 to 2,500 ppm, 1 to 1,500 ppm, or 1 to 1,000 ppm, based on the total weight of the polyester resin.

The colorant may comprise cobalt acetate, cobalt propionate, an organic compound colorant, an inorganic compound colorant, a dye, or any combination thereof. Specifically, the colorant may be cobalt acetate, cobalt propionate, an inorganic compound colorant, or a combination thereof.

The colorant may be used in an amount of 1 to 500 ppm based on the total weight of the polyester resin. Specifically, the colorant may be used in an amount of 1 to 200 ppm based on the total weight of the polyester resin.

Step (ii)

In this step, the resin composition is kneaded and gelated.

This step may comprise at least one of the steps: (ii-1) gelating the resin composition using a planetary extruder or a Banbury intensive mixer; (ii-2) homogenizing the resin composition using a mixing roll; and (ii-3) homogenizing the resin composition using a warming roll prior to feeding into a calender roll. Specifically, the step (ii) may be performed in the order of steps (ii-1), (ii-2), and (ii-3).

The step (ii-1) may be performed at 180 to 230°C. In addition, the step (ii-2) may be carried out at 90 to 130°C. Further, the step (ii-3) may be carried out at 90 to 130°C.

Step (iii)

In this step, the gelated composition is calendered to form a film.

The calendering may comprise the step of calendering a film using a calender roll. Specifically, the step of calendering a film using a calender roll may be performed at a rate of 10 to 120 m/min at 145 to 210°C, but is not limited thereto.

This step may further comprise the step of peeling the calendered film from the calender roll using take-off rolls and adjusting the thickness and smoothness of the film. The step of adjusting the thickness and smoothness of the film may be performed at a rate of 30 to 120 m/min at 120 to 170°C, but is not limited thereto.

A step of treating the surface of the calendered film may be further included after the step (iii) and before the step (vi), which surface treatment step may improve the windability of the film and enables to materialize a matte property.

The surface treatment comprises, for example, an embossing process and the like. The embossing process refers to a process in which heat and pressure are applied to the surface of a film to form a concave or convex shape. For example, the embossing process may be carried out at 30 to 90°C using an embossing unit. In such event, the surface treatment rate of the film may be 30 to 120 m/min, but is not limited thereto.

Step (iv)

In this step, the calendered film is cooled.

If the step (iii) comprises the step of embossing (i.e., surface-treating) the calendered film, a step of peeling the film from the embossing unit using an annealing roll may be performed in advance. In such event, the peeling of the film may be carried out at 5 to 80°C at a rate of 40 to 130 m/min, but is not limited thereto.

The cooling may be performed using a cooling roll at a rate of 30 to 120 m/min in a temperature range of -5 to 50°C.

Subsequently, the steps of cutting the width of the cooled film using a side trimming device; and measuring the thickness of the film thus produced using a thickness gauge may be further included.

In the relationship between the temperature of the step (iii) and the temperature of the step (iv), the $\Delta T$ as calculated by the following Equation 2 may be 20 to 225°C. Specifically, the $\Delta T$ may be 25 to 220°C, 30 to 215°C, or 35 to 210°C. If the value of $\Delta T$ satisfies the above range, the shrinkage rate of the film is minimized, and the thickness smoothness of the film is maximized.

[Equation 2]

$$\Delta T = T1 - T2$$

T1: the maximum temperature (°C) of the step (iii)
T2: the minimum temperature (°C) of the step (iv)

Step (v)

In this step, the cooled film is wound.
The cooled film may be wound at a speed of 55 to 95 m/min using a winder, but is not limited thereto.

**Mode for the Invention**

Hereinafter, the present invention will be described in more detail with reference to the following examples. However, these examples are set forth to illustrate the present invention, and the scope of the present invention is not limited thereto.

<Preparation of a polyester resin for calendering>

**Example 1: Preparation of a polyester resin for calendering**

A copolymerized polyester resin was prepared using the components in the amounts as shown in Table 1 below.
First, the components shown in the following Table 1 were charged to a 30-liter reactor equipped with a stirrer and an outlet condenser so that the molar ratio of the dicarboxylic acid component to the diol component was 1:1.35 with the final polymer of 20 kg as a base amount. Thereafter, the pressure in the reactor was raised to 2.0 kg/cm$^2$ with nitrogen, and the temperature of the reactor was gradually elevated to 255°C for conducting the reaction. In such event, the produced water was discharged out of the system to carry out the esterification reaction. When the generation and the discharge of water were completed, the reaction product was transferred to a polycondensation reactor equipped with a stirrer, a cooling condenser, and a vacuum system.
An antimony-based catalyst (antimony triglycolate, Sigma-Aldrich) and triethyl phosphate (TEP) as a stabilizer were added to the esterification reaction product thus obtained in amounts of 500 ppm based on the amount of the antimony element and 700 ppm based on the phosphorous element, respectively. Thereafter, while the temperature inside the reactor was elevated from 240°C to 285°C, the reaction was performed under a low vacuum by lowering the pressure from atmospheric pressure to 50 mmHg for 40 minutes. Thereafter, ethylene glycol was withdrawn, the pressure was gradually reduced to 0.1 mmHg, and the reaction was carried out under a high vacuum until the intrinsic viscosity reached the value as shown in Table 1 below. The resulting reaction product was discharged and cut into chips to prepare a copolymerized polyester resin for calendering.

**Examples 2 to 4 and Comparative Examples 1 to 4, 6, and 7**

Copolymer polyester resins for calendering were prepared in the same manner as in Example 1, except that the components were used in the amounts as shown in Table 1 below to produce the copolymerized polyester resins.

**Comparative Example 5**

A copolymerized polyester resin for calendering was prepared in the same manner as in Example 1, except that the components were used in the amounts as shown in Table 1 below to produce the copolymerized polyester resin and that methyl methacrylate was added in the polycondensation reaction in an amount of 5% by weight based on the amount of the final polymer.

**Evaluation Example 1**

The following properties of the resins prepared in Examples 1 to 4 and Comparative Examples 1 to 7 were measured and evaluated, and the results are shown in Table 1.

1-1: Intrinsic viscosity (IV) of a resin

Each of the resins prepared in Examples 1 to 4 and Comparative Examples 1 to 7 was dissolved in ortho-chlorophenol at 100°C, and the intrinsic viscosity (IV) was measured with an Ostwald viscometer at 35°C in a thermostatic bath by measuring the time for the sample to drop.

1-2: Calendering processability

The resins prepared in Examples 1 to 4 and Comparative Examples 1 to 7 were evaluated for the calendering processability through the thickness uniformity of the sheet.

Specifically, each of the resins prepared in Examples 1 to 4 and Comparative Examples 1 to 7 was extruded at 190°C, kneaded at 110°C for gelation thereof, and calendered to prepare a sheet having a thickness of 0.2 mm. Thereafter, the uniformity of the sheet thickness was measured using a thickness measuring machine (TESA, model: TESA-uHITE). In such event, the calendering processability was evaluated as "◎" if the thickness uniformity was ±5% or less, "○" if it was greater than ±5% up to 10% or less, "Δ" if it was greater than ±10% up to 15% or less, and "X" if it was greater than ±15% up to 20% or less.

1-3: Heat of crystallization (ΔHc)

The resins prepared in Examples 1 to 4 and Comparative Examples 1 to 7 were evaluated for the heat of crystallization (ΔHc) with a differential scanning calorimeter (DSC). Specifically, the polyester resin produced was annealed at 300°C for 5 minutes, cooled to room temperature, and then rescanned at a heating rate of 0.1°C/min to determine the inherent heat of crystallization (J/g) of the resin.

1-4: Economical efficiency

The resins prepared in Examples 1 to 4 and Comparative Examples 1 to 7 were evaluated for the economical efficiency as "◎" if the manufacturing cost was reduced by greater than 7.5% up to 10% relative to that of the conventional alicyclic polyester resin, "○" if it was reduced by greater than 5% up to 7.5%, "Δ" if it was reduced by greater than 2.5% up to 5%, and "X" if it was reduced by 2.5% or less.

[Table 1]

| Component (% by weight) | | Ex. 1 | Ex. 2 | Ex. 3 | Ex. 4 | C. Ex. 1 | C. Ex. 2 | C. Ex. 3 | C. Ex. 4 | C. Ex. 5 | C. Ex. 6 | C. Ex. 7 |
|---|---|---|---|---|---|---|---|---|---|---|---|---|
| Dicarboxylic acid | TPA | 100 | 100 | 100 | 100 | 100 | 100 | 100 | 100 | 100 | 100 | 100 |
| Diol | NPG | 33 | 43 | 57 | 82 | 18 | - | 65 | 32 | 35 | 30 | 51 |
| | EG | 67 | 57 | 43 | 18 | 77 | 70 | 35 | 58 | 65 | 70 | 49 |
| | DEG | - | - | - | - | 5 | - | - | - | - | - | - |
| | CHDM | - | - | - | - | - | 30 | - | 10 | - | - | - |
| Methyl methacrylate | | - | - | - | - | - | - | - | - | 5 | - | - |
| IV of resin (dl/g) | | 0.78 | 0.78 | 0.72 | 0.71 | 0.68 | 0.75 | 0.65 | 0.76 | 0.75 | 0.81 | 0.58 |
| 1st process index | | 1.11 | 1.21 | 1.29 | 1.53 | 0.91 | 1.05 | 1.30 | 1.18 | 1.10 | 1.11 | 1.09 |
| Calendering processability | | ○ | ◎ | ◎ | ○ | X | ○ | Δ | ○ | Δ | Δ | X |
| Heat of crystallization (J/g) | | 2.2 | 1.5 | 0.9 | 0.7 | 5 | 0.3 | 0.5 | 1.0 | 1.9 | 2.4 | 1.1 |
| Economical efficiency | | ◎ | ◎ | ◎ | ○ | ◎ | X | ○ | Δ | Δ | ◎ | ◎ |
| * TPA: terephthalic acid, NPG: neopentyl glycol, EG: ethylene glycol, DEG: diethylene glycol, CHDM: cyclohexanedimethanol. | | | | | | | | | | | | |

As shown in Table 1, it was confirmed that Examples 1 to 4 are excellent in calendering workability, have a low heat of crystallization, and are economical in terms of cost, as compared with Comparative Examples 1 to 7.

**Example 5: Film prepared from a copolymerized polyester resin**

5-1: Preparation of a copolymerized polyester resin

In order to prepare a copolymerized polyester resin, ethylene glycol (EG) and neopentyl glycol (NPG) as a diol component and terephthalic acid (TPA) as a dicarboxylic acid component were charged to a 2,500-liter reactor equipped with a stirrer and an outlet condenser with the final polymer of 2,000 kg as a base amount. The diol component and the dicarboxylic acid component were added such that 1.5 moles of the diol component was added per 1 mole of the dicarboxylic acid component. The molar ratio between the diol components was such that the molar ratio of EG to NPG was 5:5.

Thereafter, the pressure in the reactor was raised to 2.0 kg/cm$^2$ with nitrogen, and the temperature of the reactor was elevated to 265°C for conducting the reaction. In such event, the produced water was discharged out of the system to carry out the esterification reaction. When the generation and the discharge of water were completed, the reaction product was transferred to a polycondensation reactor equipped with a stirrer, a cooling condenser, and a vacuum system.

An antimony-based catalyst (antimony triglycolate) as a metal-based polycondensation catalyst and triethyl phosphate (TEP) as a stabilizer were added to the esterification reaction product thus obtained in amounts of 300 ppm based on the amount of the antimony element and 500 ppm based on the phosphorous element, respectively. Thereafter, while the temperature inside the reactor was elevated from 240°C to 290°C, the reaction was performed under a low vacuum by lowering the pressure from atmospheric pressure to 50 mmHg for 40 minutes. Thereafter, ethylene glycol was withdrawn out of the system, the pressure was gradually reduced to 0.1 mmHg, and the reaction was carried out under a high vacuum until the maximum power value. The resulting reaction product was discharged and cut into chips to prepare a copolymerized polyester resin.

The copolymerized polyester resin thus obtained had an intrinsic viscosity (IV) of 0.8 dl/g and a heat of crystallization of 0 J/g. The viscosity retention rate of the copolymerized polyester resin at the time of shearing was 15 $\pm$ 5 Nm.

The intrinsic viscosity was measured in the same manner as in Evaluation Example 1-1, the heat of crystallization was measured in the same manner as in Evaluation Example 1-3, and the viscosity retention rate at the time of shearing was measured by the following method.

The viscosity retention rate at the time of shearing was measured with a Brabender (manufacturer: Brabender GmbH & Co. KG, model: Brabender® Plasti-Corder equipment) as the difference in shear stress 10 minutes and 30 minutes after the Brabender began to operate while the copolymerized polyester resin was treated at 190°C and 50 rpm.

5-2: Preparation of a film by calendering

The copolymerized polyester resin of Example 5-1 was calendered to prepare a film. 2 phr (part per hundred resin) of a process additive (manufacturer: Brother Enterprise, product name: Montanwax E) was added based on the total amount of the copolymerized polyester resin. Thereafter, the mixture was extruded at 190°C, kneaded at 110°C for gelation thereof, and calendered to prepare a film having a thickness of 0.2 mm. The film thus prepared was subjected to an embossing process before cooling, and the roughness (Ra) of the embossing roll used was 3 $\mu$m. Thereafter, it was cooled to 45°C and wound.

**Comparative Example 8: Film prepared from a polyvinylchloride** (PVC) **resin**

A film was prepared in the same manner as in Example 5, except that a PVC resin for calendering (product name: P1000) manufactured by Hanwha Chemical Co., Ltd. was used as a PVC resin.

**Comparative Example 9: Film prepared from a polypropylene (PP) resin**

A film was prepared in the same manner as in Example 5, except that a resin for calendering (weight average molecular weight: 550,000 to 1,200,000 g/mole) was supplied from SK Innovation as a PP resin.

**Comparative Example 10: Film prepared from a polyethylene terephthalate (PET) resin**

A film was prepared in the same manner as in Example 5, except that TPA was used as the dicarboxylic acid and EG alone was used as the diol component.

**Comparative Example 11: Film prepared from a polyethylene terephthalate glycol (PETG) resin**

A film was prepared in the same manner as in Example 5, except that TPA was used as the dicarboxylic acid, EG and CHDM were used as the diol components, and EG and CHDM were mixed in a molar ratio of be 7:3.

**Evaluation Example 2**

The resins prepared in Example 5 and Comparative Examples 8 to 11 and the films prepared from the resins were tested for measuring and evaluating their properties. The results are shown in Table 2.

2-1: Evaluation of environmental friendliness

The films of Example 5 and Comparative Examples 8 to 11 were evaluated for environmental friendliness. The evaluation of environmental friendliness was performed using a small-scale emission test chamber according to the indoor air quality process test standard (Ministry of the Environment Notice No. 2017-11).
Air sampling for emission measurements was performed after 7 days (168 hours $\pm$ 2 hours) from the start of the test. The emission test was started when the prepared specimen was installed in the chamber. Analysis of volatile organic compounds was conducted in accordance with ES 02603.1 "Determination of volatile organic compounds released from indoor and building materials - Solid sorbent tube and gas chromatograph - MS / FID method."
Each of the films of Example 5 and Comparative Examples 8 to 11 was cut into 16 cm x 16 cm x 0.2 mm (width x length x thickness), and the amount of volatile organic compounds generated (mg/m$^2$·hr) was evaluated as "⊚" for the smallest amount, "○" for the second smallest amount, "△" for the third smallest amount, and "X" for the largest amount.

2-2: Calendering processability

The resins prepared in Example 5 and Comparative Examples 8 to 11 were evaluated for the calendering processability through the thickness uniformity of the sheet and the extent of undissolved gels generated.
Specifically, the target thickness of the sheet was 0.2 mm, and the extent of undissolved gels was evaluated by the number of undissolved gels (foreign matters) per 1 m$^2$ of the film by observing the surface of the film with naked eyes. The calendering processability was evaluated in the same manner as in Evaluation Example 1-2. In addition, the uniformity of the sheet thickness and the number of undissolved gels together were relatively evaluated as "⊚" for the smallest number, "○" for the second smallest number, "△" for the third and fifth smallest numbers, and "X" if the process is not operable.

2-3: Surface hardness

The films prepared in Example 5 and Comparative Examples 8 to 11 were evaluated for the surface hardness according to the pencil hardness tester method. The surface hardness of the untreated film was measured under the conditions of a load of 200 g and a speed of 5 mm/sec, and the average value was calculated from 10 repeated measurements.

2-4: Transparency

The films prepared in Example 5 and Comparative Examples 8 to 11 were evaluated for the transparency with a haze meter: NDH 5000W (manufacturer: Nippon Denshoku Industries).
In general, in a decorative sheet, a transparent layer is laminated on a printing paper. In such event, the parallel transmittance is important for good visibility of the printing paper. Therefore, the transparency of the film was measured through the parallel transmittance.

2-5: Stain resistance

The films prepared in Example 5 and Comparative Examples 8 to 11 were evaluated for the stain resistance by the HCJ-D-204-7 and HCJ-D-204-8 methods. In such event, the stain resistance was evaluated as "⊚" if the number of changes was 1 or less, "○" if the number was 2 or less, "△" if the number was 3 or less, and "X" if the number was 4 or less. Here, the change means that haze is generated on the surface of the film or that the surface of the film is swelled.

2-6: Surface tension

The films prepared in Example 5 and Comparative Examples 8 to 11 were evaluated for the surface tension through contact angle measurements. The measurement equipment used was a phoenix 300 touch from SEO, and Di-water was used as the standard solution for measurements. The method of calculating the surface tension through the contact angle is as follows.

$$\gamma = \gamma^d + \gamma^p \quad \cdots\cdots \text{Equation (1)}$$

where, d: Lifshitz-van der Waals interaction, p: acid-base interaction

$$\gamma^p = 2(\sqrt{\gamma_s^+ \gamma_s^-} \quad \cdots\cdots \text{Equation (2)}$$

$$\gamma_{LV1}(1 + \cos\theta_1) = 2(\sqrt{\gamma_s^d \gamma_{LV1}^d} + \sqrt{\gamma_s^{\oplus} \gamma_{LV1}^{\ominus}} + \sqrt{\gamma_s^{\ominus} \gamma_{LV1}^{\oplus}})$$

$$\gamma_{LV2}(1 + \cos\theta_2) = 2(\sqrt{\gamma_s^d \gamma_{LV2}^d} + \sqrt{\gamma_s^{\oplus} \gamma_{LV2}^{\ominus}} + \sqrt{\gamma_s^{\ominus} \gamma_{LV2}^{\oplus}}) \quad \cdots \text{Equation (3)}$$

$$\gamma_{LV3}(1 + \cos\theta_3) = 2(\sqrt{\gamma_s^d \gamma_{LV3}^d} + \sqrt{\gamma_s^{\oplus} \gamma_{LV3}^{\ominus}} + \sqrt{\gamma_s^{\ominus} \gamma_{LV3}^{\oplus}})$$

where, LV1: di-water LV2: glycerol, LV3: diiodmethane, θ: contact angle $\gamma_s$: surface free energy of sample surface

2-7: Chrominance

The films prepared in Example 5 and Comparative Examples 8 to 11 were evaluated for the chrominance according to the accelerated weathering test (KS M ISO 4892-2). The measurement conditions were such that the initial color was measured with a xenon arc of 6,500 W as a light source, a radiation intensity of 0.51 W/m$^2$, a measuring temperature of 63 ± 3°C, and a relative humidity of 50 ± 5%. After the sample stood for 500 hours under the above conditions, the color was measured to evaluate the chrominance change.

2-8: Printability

The films prepared in Example 5 and Comparative Examples 8 to 11 were evaluated for the printability according to the adhesion test (ASTM D3359). After the film was printed with a bar coating method without primer treatment, the surface of the film was X-cut, and a tape (manufacturer: TESA, model: Tesa 7476) was attached and then detached to check the degree of peeling off of the printing layer. In such event, "X" indicates that the printing layer is peeled off, and "O" indicates that the printing layer is retained.

2-9: Moldability

The films produced in Example 5 and Comparative Examples 8 to 11 were evaluated for the moldability by a processable depth measurement method. The moldability was evaluated as "◎" if the depth at which the sample is thermoformable with a vacuum molding machine at 35 mm and 120°C was 10 mm, "○" if it was 8 mm, "Δ" if it was 6 mm, and "X" if it was 4 mm.

[Table 2]

|  |  | Ex. 5 | C. Ex. 8 | C. Ex. 9 | C. Ex. 10 | C. Ex. 11 |
|---|---|---|---|---|---|---|
| Resin |  | co-PET | PVC | PP | PET | PETG |
| Process | Environmental friendliness | ◎ | X | Δ | Not measurable | ◎ |
|  | Calendering processability | ○ | ◎ | Δ | X (Not processable) | Δ |

(continued)

| | | Ex. 5 | C. Ex. 8 | C. Ex. 9 | C. Ex. 10 | C. Ex. 11 |
|---|---|---|---|---|---|---|
| Properties of film | Surface hardness | B | 2B | 3B | - | 6B |
| | Transparency (%) | 60 | 10.5 | 35 | - | 61 |
| | Stain resistance | ◎ | Δ | ○ | - | ○ |
| | Surface tension (mN/m) | 40 | 38 | 29 | - | 41 |
| | Chrominance | 0.8 | 3.2 | 2.1 | - | 4.7 |
| Properties of resin | 1st process index | 1.4 | - | - | 0.67 | 1.05 |
| | Heat of crystallization (J/g) | 0 | - | 17.6 | 39.9 | 0 |
| | Viscosity retention rate at the time of shearing (Nm) | 2.0 | 1.9 | 5.3 | 9.1 | 6.2 |
| Post-processability | Printability | ○ | ○ | X (Not printable without a primer) | - | ○ |
| | Moldability | ◎ | ○ | Δ | - | ◎ |

As shown in Table 2, the film of Example 5 is superior to the films of Comparative Examples 8 to 11 in terms of the environmental friendliness, calendering processability, surface hardness, transparency, stain resistance, surface tension, chrominance, printability, and embossing processability.

**Example 6**

6-1: Preparation of a polyester resin for calendering

In order to prepare a polyester resin, the diol component and the dicarboxylic acid component shown in the following Table 3 were charged to a 2,500-liter reactor equipped with a stirrer and an outlet condenser with the final polymer of 2,000 kg as a base amount. The diol component and the dicarboxylic acid component were added so that 1.5 moles of the diol component was added per 1 mole of the dicarboxylic acid component. Terephthalic acid (TPA) was used as the dicarboxylic acid component. Thereafter, the pressure in the reactor was raised to 2.0 kg/cm$^2$ with nitrogen, and the temperature of the reactor was gradually elevated to 265°C for conducting the reaction. In such event, the produced water was discharged out of the system to carry out the esterification reaction. When the generation and the discharge of water were completed, the reaction product was transferred to a polycondensation reactor equipped with a stirrer, a cooling condenser, and a vacuum system.

An antimony-based catalyst (antimony triglycolate) as a metal-based polycondensation catalyst and triethyl phosphate (TEP) as a stabilizer were added to the esterification reaction product thus obtained in amounts of 300 ppm based on the amount of the antimony element and 500 ppm based on the phosphorous element, respectively. Thereafter, while the temperature inside the reactor was elevated from 240°C to 285 to 290°C, the reaction was performed under a low vacuum by lowering the pressure from atmospheric pressure to 50 mmHg for 40 minutes. Thereafter, ethylene glycol was withdrawn out of the system, the pressure was gradually reduced to 0.1 mmHg, and then the reaction was carried out under a high vacuum until the maximum power value. The resulting reaction product was discharged and cut into chips to prepare a copolymerized polyester resin for calendering.

6-2: Preparation of a film

The polyester resin of Example 6-1 and the additive were mixed in a weight ratio of 100:1.2 to prepare a polyester resin composition. A montane-based process additive (manufacturer: Brother Enterprise, product name: Montanwax E) was used as the additive. Thereafter, the resin composition was extruded at 200°C, kneaded at 110°C for gelation thereof, and calendered to prepare a film having a thickness of 0.2 mm.

**Examples 7 to 12 and Comparative Examples 12 to 18**

Polyester resin compositions for calendering were prepared in the same manner as in Example 1, except that the diol components, their content ratio, and the amount of the additives were changed as described in Tables 3 and 4, and films were then prepared using the same.

**Evaluation Example 3**

The resins prepared in Examples 6 to 12 and Comparative Examples 12 to 18 and the films prepared from the resins were tested for measuring and evaluating their properties. The results are shown in Tables 3 and 4.

3-1: Intrinsic viscosity (IV) of a polyester resin

The polyester resins of Examples 6 to 12 and Comparative Examples 12 to 18 were evaluated for the intrinsic viscosity.

Each of the resins prepared in Examples 6 to 12 and Comparative Examples 12 to 18 were dissolved in ortho-chlorophenol at 100°C, and the intrinsic viscosity (IV) was measured with an Ostwald viscometer at 35°C in a thermostatic bath by measuring the time for the sample to drop.

3-2: First process index of a polyester resin

The polyester resins of Examples 6 to 12 and Comparative Examples 12 to 18 were evaluated for the first process index. The first process index was calculated by the following Equation 1.

[Equation 1]

First process index = {(% by mole of diol residues other than ethylene glycol based on the total moles of the diol repeat unit) / 100} + intrinsic viscosity of the polyester resin (dl/g).

3-3: Heat of crystallization of a polyester resin

The resins prepared in Examples 6 to 12 and Comparative Examples 12 to 18 were evaluated for the heat of crystallization (ΔHc) with a differential scanning calorimeter (DSC). Specifically, each of the polyester resins produced was annealed at 300°C for 5 minutes, cooled to room temperature, and then rescanned at a heating rate of 0.1°C/min to determine the inherent heat of crystallization (J/g) of the resin.

3-4: Second process index of a polyester resin composition

The polyester resin compositions of Examples 6 to 12 and Comparative Examples 12 to 18 were evaluated for the second process index. The second process index was calculated by the following Equation 3. The values were rounded to the third decimal places.

[Equation 3]

Second process index = {{[(% by mole of diol residues other than ethylene glycol based on the total moles of the diol repeat unit) / 100] + intrinsic viscosity of the polyester resin (dl/g)} − heat of crystallization of the polyester resin (J/g)} x content of the additive (% by weight).

3-5: Calendering processability of a polyester resin composition

The polyester resin compositions prepared in Examples 6 to 12 and Comparative Examples 12 to 18 were evaluated for the calendering processability by the thickness uniformity of the sheet.

Specifically, the uniformity of the sheet thickness for the films of Examples 6 to 12 and Comparative Examples 12 to 18 was measured using a thickness measuring machine (TESA, model: TESA-uHITE) with the target thickness of the sheet being 0.2 mm. In such event, the calendering processability was evaluated as "◎" if the thickness uniformity was ±5% or less, "○" if it was greater than ±5% and less than 10%, "Δ" if it was greater than ±10% and less than 15%, and "X" if it was greater than ±15% and less than 20%.

3-6: Haze of a polyester film

The polyester films prepared in Examples 6 to 12 and Comparative Examples 12 to 18 were evaluated for the haze. Specifically, each of the films of Examples 6 to 12 and Comparative Examples 12 to 18 was cut into 16 cm x 16 cm x 0.2 mm (width x length x thickness), and the haze was measured using a haze meter: NDH 5000W (manufacturer: Nippon Denshoku Industries).

[Table 3]

| | | Ex. 6 | Ex. 7 | Ex. 8 | Ex. 9 | Ex. 10 | Ex. 11 | Ex. 12 |
|---|---|---|---|---|---|---|---|---|
| Diol | NPG | 33 | 43 | 55 | 67 | 25 | 71 | 82 |
| | EG | 67 | 57 | 45 | 33 | 75 | 24 | 18 |
| | DEG | - | - | - | - | - | 5 | - |
| | CHDM | - | - | - | - | - | - | - |
| Amount of additive | | 1.2 | 1.5 | 0.9 | 2.5 | 1.6 | 3.6 | 3.5 |
| Intrinsic viscosity of resin (dl/g) | | 0.78 | 0.75 | 0.85 | 0.68 | 0.72 | 0.82 | 0.71 |
| 1st process index | | 1.11 | 1.18 | 1.4 | 1.35 | 0.97 | 1.58 | 1.53 |
| Heat of crystallization (J/g) | | 0.2 | 0 | 0 | 0 | 0.5 | 0 | 0 |
| 2nd process index | | 1.09 | 1.77 | 1.26 | 3.38 | 0.75 | 5.69 | 5.36 |
| Calendering processability | | ○ | ◎ | ◎ | ○ | ◎ | ○ | ○ |
| Haze of film (%) | | 4 | 5 | 2 | 8 | 5 | 13 | 11 |

[Table 4]

| | | Comp. Ex. 12 | Comp. Ex. 13 | Comp. Ex. 14 | Comp. Ex. 15 | Comp. Ex. 16 | Comp. Ex. 17 | Comp. Ex. 18 |
|---|---|---|---|---|---|---|---|---|
| Diol | NPG | 18 | 5 | 92 | 13 | 43 | 30 | 51 |
| | EG | 82 | 65 | 8 | 77 | 57 | 70 | 49 |
| | DEG | - | - | - | - | - | - | - |
| | CHDM | - | 30 | - | 10 | - | - | - |
| Amount of additive | | 8 | 7.2 | 9.5 | 0.3 | 0.1 | 6.8 | 0 |
| Intrinsic viscosity of resin (dl/g) | | 0.68 | 0.75 | 0.65 | 0.76 | 0.75 | 0.52 | 0.58 |
| 1st process index | | 0.86 | 1.1 | 1.57 | 0.99 | 1.18 | 0.82 | 1.09 |
| Heat of crystallization (J/g) | | 8 | 0 | 0 | 5 | 0 | 0.3 | 0 |
| 2nd process index | | -57.12 | 7.92 | 14.92 | -1.20 | 0.12 | 3.54 | 0.00 |
| Calendering processability | | X | ○ | Δ | X | X | Δ | X |

(continued)

| | Comp. Ex. 12 | Comp. Ex. 13 | Comp. Ex. 14 | Comp. Ex. 15 | Comp. Ex. 16 | Comp. Ex. 17 | Comp. Ex. 18 |
|---|---|---|---|---|---|---|---|
| Haze of film (%) | Not measurable | 28 | 39 | Not measurable | Not measurable | 24 | Not measurable |

With reference to Tables 3 and 4, it was confirmed that Examples 6 to 12 have a low heat of crystallization and a proper intrinsic viscosity, and are excellent in calendering workability and haze of the films prepared, as compared with Comparative Examples 12 to 18.

**Claims**

1. A polyester resin for calendering, which comprises: a dicarboxylic acid repeat unit and a diol repeat unit, wherein the diol repeat unit comprises from greater than 10% by mole up to 90% by mole of a neopentyl glycol residue based on the total moles of the diol repeat unit, the diol repeat unit does not comprise an alicyclic diol residue, and the polyester resin has an intrinsic viscosity (IV) of 0.6 to 3.0 dl/g.

2. The polyester resin for calendering according to claim 1, wherein the dicarboxylic acid repeat unit comprises a residue of terephthalic acid, isophthalic acid, naphthalenedicarboxylic acid, cyclohexanedicarboxylic acid, or a combination thereof; and the diol repeat unit further comprises a residue of ethylene glycol, diethylene glycol, or a combination thereof.

3. The polyester resin for calendering according to claim 1, which has a first process index of greater than 1.0 up to 1.7 as calculated by the following Equation 1:

[Equation 1]

First process index = {(% by mole of diol residues other than ethylene glycol based on the total moles of the diol repeat unit) / 100} + intrinsic viscosity of the polyester resin (dl/g).

4. A process for preparing a polyester resin for calendering, which comprises:

   (a) mixing a dicarboxylic acid component and a diol component in a molar ratio of 1:1.05 to 1:3.0 and performing an esterification reaction thereof; and
   (b) polycondensing the esterification reaction product,

   wherein the diol component comprises from greater than 10% by mole up to 90% by mole of neopentyl glycol based on the total moles of the diol component, the diol component does not comprise an alicyclic diol, and the polyester resin has an intrinsic viscosity (IV) of 0.6 to 3.0 dl/g.

5. The process for preparing a polyester resin for calendering according to claim 4, wherein the polycondensation is carried out in the presence of a polycondensation catalyst and a stabilizer under the conditions of a temperature of 230 to 300°C and a pressure of 0.1 to 3.0 kg/cm$^2$.

6. The process for preparing a polyester resin for calendering according to claim 5, wherein the polycondensation catalyst comprises an alkali metal, an alkaline earth metal, antimony, titanium, manganese, cobalt, cerium, germanium, or a combination thereof; and the stabilizer comprises a phosphorus-based stabilizer.

7. The process for preparing a polyester resin for calendering according to claim 5, wherein the polycondensation catalyst is used in an amount of 50 to 1,000 ppm based on the total weight of the polyester resin; and the stabilizer is used in an amount of 3,000 ppm or less based on the total weight of the polyester resin.

8. A process for preparing a copolymerized polyester film, which comprises:

    (1) mixing a polyester resin comprising a dicarboxylic acid repeat unit and a diol repeat unit;
    (2) kneading the mixed resin to gelate it;
    (3) calendering the gelated resin to form a film;
    (4) cooling the calendered film; and
    (5) winding the cooled film,

wherein the diol repeat unit is composed of a linear or branched $C_2$ to $C_{10}$ diol residue, and the polyester resin has an intrinsic viscosity (IV) of 0.6 to 3.0 dl/g.

9. The process for preparing a copolymerized polyester film according to claim 8, which further comprises the step of mixing the polyester resin and an additive after the step (1) and before the step (2), wherein the additive comprises at least one selected from the group consisting of a fatty acid, a fatty acid salt, a metal salt of an organic acid, a fatty acid ester, a hydrocarbon wax, an ester wax, a phosphoric acid ester, an amide, a modified polyolefin wax, talc, and an acrylic copolymer.

10. The process for preparing a copolymerized polyester film according to claim 8, which further comprises the step of treating the surface of the calendered film after the step (3) and before the step (4).

11. The process for preparing a copolymerized polyester film according to claim 8, wherein the ΔT as calculated by the following Equation 2 is 20 to 225°C:

[Equation 2]

$$\Delta T = T1 - T2$$

wherein T1 is the maximum temperature (°C) of the step (3); and
T2 is the minimum temperature (°C) of the step (4).

12. A copolymerized polyester film prepared by the process according to claim 8.

13. The copolymerized polyester film according to claim 12, which has a surface hardness of B to HB, a transparency of 30% to 75%, a surface tension of 37 to 43 mN/m, and a chrominance (ΔE) of 0.2 to 1.9 as measured after standing at 63 ± 3°C and a relative humidity of 50 ± 5% for 500 hours.

14. A polyester resin composition for calendering, which comprises a polyester resin and an additive, wherein the polyester resin comprises a dicarboxylic acid repeat unit and a diol repeat unit, the diol repeat unit is composed of a linear or branched $C_2$ to $C_{10}$ diol residue, the diol repeat unit comprises 10 to 90% by mole of a neopentyl glycol residue based on the total moles of the diol repeat unit, the polyester resin has an intrinsic viscosity (IV) of 0.6 to 3.0 dl/g, and the polyester resin composition has a second process index of 0.5 to 10 as calculated by the following Equation 3:

[Equation 3]

Second process index = {{[(% by mole of diol residues other than ethylene glycol based on the total moles of the diol repeat unit) / 100] + intrinsic viscosity of the polyester resin (dl/g)} – heat of crystallization of the polyester resin (J/g)} x content of the additive (% by weight).

15. The polyester resin composition for calendering according to claim 14, wherein the weight ratio of the polyester resin to the additive is 100:0.5 to 100:5.

16. The polyester resin composition for calendering according to claim 14, wherein the additive comprises at least one selected from the group consisting of a fatty acid, a fatty acid salt, a metal salt of an organic acid, a fatty acid ester, an amide, a hydrocarbon wax, an ester wax, a phosphoric acid ester, a polyolefin wax, a modified polyolefin wax, talc, and an acrylic copolymer.

17. The polyester resin composition for calendering according to claim 14, wherein the polyester resin has a heat of crystallization of 2.5 J/g or less; and the first process index as calculated by the following Equation 1 is 0.8 to 2.0:

[Equation 1]

First process index = {(% by mole of diol residues other than ethylene glycol based on the total moles of the diol repeat unit) / 100} + intrinsic viscosity of the polyester resin (dl/g).

18. A film, which comprises a base layer comprising the polyester resin according to claim 1 or the polyester resin composition according to claim 14; and
a printing layer laminated on the base layer.

19. A process for preparing a polyester film, which comprises:

(i) mixing a polyester resin comprising a dicarboxylic acid repeat unit and a diol repeat unit with an additive to prepare a polyester resin composition;
(ii) kneading the resin composition to gelate it;
(iii) calendering the gelated composition to form a film;
(iv) cooling the calendered film; and
(v) winding the cooled film,

wherein the diol repeat unit is composed of a linear or branched $C_2$ to $C_{10}$ diol residue,
the diol repeat unit comprises 10 to 90% by mole of a neopentyl glycol residue based on the total moles of the diol repeat unit,
the polyester resin has an intrinsic viscosity (IV) of 0.6 to 3.0 dl/g, and
the resin composition has a second process index of 0.5 to 10 as calculated by the following Equation 3:

[Equation 3]

Second process index = {{[(% by mole of diol residues other than ethylene glycol based on the total moles of the diol repeat unit) / 100] + intrinsic viscosity of the polyester resin (dl/g)} – heat of crystallization of the polyester resin (J/g)} x content of the additive (% by weight).

20. The process for preparing a polyester film according to claim 19, wherein in the step (i), the weight ratio of the polyester resin to the additive is 100:0.5 to 100:5.

21. The process for preparing a polyester film according to claim 19, wherein the additive comprises at least one selected from the group consisting of a fatty acid, a fatty acid salt, a metal salt of an organic acid, a fatty acid ester, an amide, a hydrocarbon wax, an ester wax, a phosphoric acid ester, a polyolefin wax, a modified polyolefin wax, talc, and an acrylic copolymer.

22. The process for preparing a polyester film according to claim 19, which further comprises the step of treating the surface of the calendered film after the step (iii) and before the step (vi).

## INTERNATIONAL SEARCH REPORT

| International application No. |
| --- |
| PCT/KR2017/015001 |

### A. CLASSIFICATION OF SUBJECT MATTER

C08L 67/02(2006.01)i, B29C 73/24(2006.01)i, B29C 47/88(2006.01)i, C08J 5/18(2006.01)i, C08J 7/00(2006.01)i,
C08G 63/16(2006.01)i, C08G 63/181(2006.01)i, C08G 63/183(2006.01)i, C08G 63/78(2006.01)i, C08G 63/82(2006.01)i

According to International Patent Classification (IPC) or to both national classification and IPC

### B. FIELDS SEARCHED

Minimum documentation searched (classification system followed by classification symbols)

C08L 67/02; C08G 63/42; C08G 63/54; C08G 63/16; C08G 63/183; C08J 5/18; B29C 73/24; B29C 47/88; C08J 7/00; C08G 63/181;
C08G 63/78; C08G 63/82

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: dicarboxylic acid, diol, polyester resin, additive, calendaring, film

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2010-0079504 A (SK CHEMICALS CO., LTD.) 08 July 2010<br>See abstract; paragraphs [0009], [0011]-[0014], [0016], [0018], [0019], [0022]; example 1;<br>claims 1, 6; and table 1. | 1-7 |
| Y | | 8-22 |
| Y | JP 2005-008771 A (LONSEAL CORP.) 13 January 2005<br>See abstract; paragraphs [0002], [0027], [0042]-[0056]; examples 1-8; claims 1, 6;<br>and table 3. | 8-22 |
| A | JP 2014-185219 A (UNITIKA LTD. et al.) 02 October 2014<br>See the entire document. | 1-22 |
| A | KR 10-2004-0036045 A (SK CHEMICALS CO., LTD.) 30 April 2004<br>See the entire document. | 1-22 |
| A | JP 2011-046860 A (TOYOBO CO., LTD.) 10 March 2011<br>See the entire document. | 1-22 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 APRIL 2018 (15.04.2018) | **16 APRIL 2018 (16.04.2018)** |

| Name and mailing address of the ISA/KR | Authorized officer |
| --- | --- |
| Korean Intellectual Property Office<br>Government Complex-Daejeon, 189 Seonsa-ro, Daejeon 302-701,<br>Republic of Korea | |
| Facsimile No. +82-42-481-8578 | Telephone No. |

Form PCT/ISA/210 (second sheet) (January 2015)

**INTERNATIONAL SEARCH REPORT**
Information on patent family members

International application No.

**PCT/KR2017/015001**

| Patent document cited in search report | Publication date | Patent family member | Publication date |
|---|---|---|---|
| KR 10-2010-0079504 A | 08/07/2010 | KR 10-1496634 B1 | 27/02/2015 |
| JP 2005-008771 A | 13/01/2005 | JP 4292029 B2 | 08/07/2009 |
| JP 2014-185219 A | 02/10/2014 | NONE | |
| KR 10-2004-0036045 A | 30/04/2004 | KR 10-0900667 B1 | 01/06/2009 |
| JP 2011-046860 A | 10/03/2011 | JP 5251790 B2 | 31/07/2013 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20140109506

- ES 02603